(19) **Europäisches Patentamt / European Patent Office / Office européen des brevets**

(11) **EP 2 942 829 A1**

(12) # EUROPEAN PATENT APPLICATION
published in accordance with Art. 153(4) EPC

(43) Date of publication:
**11.11.2015 Bulletin 2015/46**

(21) Application number: **13860232.1**

(22) Date of filing: **28.11.2013**

(51) Int Cl.:
**H01M 4/587** (2010.01)　　**H01M 4/36** (2006.01)

(86) International application number:
**PCT/JP2013/082008**

(87) International publication number:
**WO 2014/087911 (12.06.2014 Gazette 2014/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.12.2012　JP 2012268645**
**30.05.2013　JP 2013114369**

(71) Applicant: **Sumitomo Bakelite Company Limited Shinagawa-ku Tokyo 140-0002 (JP)**

(72) Inventors:
- **ONO, Yukiharu Tokyo 140-0002 (JP)**
- **TAKEUCHI, Takeshi Tokyo 140-0002 (JP)**

(74) Representative: **Ter Meer Steinmeister & Partner Patentanwälte mbB Nymphenburger Straße 4 80335 München (DE)**

(54) **NEGATIVE ELECTRODE MATERIAL, NEGATIVE ELECTRODE ACTIVE MATERIAL, NEGATIVE ELECTRODE AND ALKALI METAL ION BATTERY**

(57)　A negative-electrode material of the present invention is a carbonaceous negative-electrode material used for an alkali metal ion battery and an average layer spacing $d_{002}$ of face (002) calculated by an X-ray diffraction method using CuKα radiation as a radiation source is equal to or greater than 0.340 nm. The halogen content of the negative-electrode material of the present invention is equal to or greater than 0.5 ppm and less than 50 ppm.

Fig.1

10

**Description**

TECHNICAL FIELD

The present invention relates to a negative-electrode material, a negative-electrode active material, a negative electrode, and an alkali metal ion battery.

BACKGROUND ART

In general, a graphite material is used as a negative-electrode material for an alkali metal ion battery. However, since the layer spacing of crystallites in the graphite material increases or decreases depending on doping or undoping of alkali metal ions such as lithium, a strain is likely to be generated in the crystallites. Accordingly, since a crystal structure of the graphite material is likely to be broken due to repeated charging and discharging, it is thought that an alkali metal ion battery using the graphite material as a negative-electrode material is poor in charging and discharging cycle characteristics.

Patent Document 1 (Japanese Unexamined Patent Publication No. 8-279358) discloses a carbonaceous material for a battery electrode which has a microstructure suitable for occlusion of lithium and has a content of halogen of 50 ppm to 10000 ppm.

Since the carbonaceous material has a layer spacing of crystallites larger than that of the graphite material and destruction of a crystal structure occurs less often than in the graphite material due to repeated charging and discharging, it is thought that the charging and discharging cycle characteristics thereof are excellent (see Patent Documents 1 and 2).

RELATED DOCUMENT

PATENT DOCUMENT

[Patent Document 1] Japanese Unexamined Patent Publication No. 8-279358
[Patent Document 2] Pamphlet of International Publication No. WO2007/040007

DISCLOSURE OF THE INVENTION

As disclosed in Patent Documents 1 and 2, the carbonaceous material having a layer spacing of crystallites larger than that of the graphite material is more likely to degrade in the air and is poorer in storage characteristics than the graphite material. Accordingly, it is necessary to store the carbonaceous material in an inert gas atmosphere or the like just after being produced and it is thus more difficult to treat the carbonaceous material than the graphite material.

In a negative-electrode material having a $d_{002}$ which is larger than that of the graphite material, since fine pores are more likely to grow than in the graphite material, moisture is likely to be adsorbed in the pores. When moisture is adsorbed, an irreversible reaction occurs between lithium with which the negative-electrode material is doped and moisture and an increase in irreversible capacity at the time of initial charging or a degradation in charging and discharging cycle characteristics is caused as a result. For this reason, it is thought that the negative-electrode material having a large $d_{002}$ is poorer in storage characteristics than the graphite material (for example, see Patent Document 2). Accordingly, in the related art, it has been attempted to improve the storage characteristics by closing the pores of the negative-electrode material so as to reduce the equilibrium moisture adsorption (for example, see Patent Document 2).

However, the inventors of the present invention performed regeneration of the negative-electrode material by heating and drying the degraded negative-electrode material to remove moisture adsorbed in the fine pores, but could not completely regenerate the negative-electrode material. As disclosed in Patent Document 2, when the pores of the negative-electrode material are closed, there is a problem in that the charging and discharging capacity is lowered.

Therefore, an object of the present invention is to provide a negative-electrode material for an alkali metal ion battery which has an average layer spacing of face (002) which is larger than that of a graphite material and which has excellent storage characteristics and charging and discharging capacity.

The inventors of the present invention have intensively studied in an attempt to realize a negative-electrode material for an alkali metal ion battery which has an average layer spacing of face (002) which is larger than that of a graphite material and has excellent storage characteristics and charging and discharging capacity. As a result, the inventors found that a negative-electrode material in which the halogen content is in a specific range has excellent storage characteristics and charging and discharging capacity, thereby completing the present invention.

According to the present invention, there is provided a carbonaceous negative-electrode material for an alkali metal ion battery in which an average layer spacing $d_{002}$ of face (002) calculated by an X-ray diffraction method using CuK$\alpha$ radiation as a radiation source is equal to or greater than 0.340 nm, in which a halogen content is equal to or greater than 0.5 ppm and less than 50 ppm.

Further, according to the present invention, there is provided a negative-electrode active material which contains the negative-electrode material.

Further, according to the present invention, there is provided a negative electrode for an alkali metal ion battery, in which a negative-electrode active material layer which includes the negative-electrode active material; and a negative-electrode collector are stacked in this order.

Further, according to the present invention, there is provided an alkali metal ion battery including at least: the negative electrode for an alkali metal ion battery; an electrolyte; and a positive electrode.

According to the present invention, it is possible to provide a negative-electrode material for an alkali metal ion battery which has an average layer spacing of face (002) which is larger than that of a graphite material and which has excellent storage characteristics and charging and discharging capacity.

BRIEF DESCRIPTION OF THE DRAWING

The above and other objects, advantages and features of the present invention will be more apparent from the following description of certain preferred embodiments taken in conjunction with the accompanying drawing.

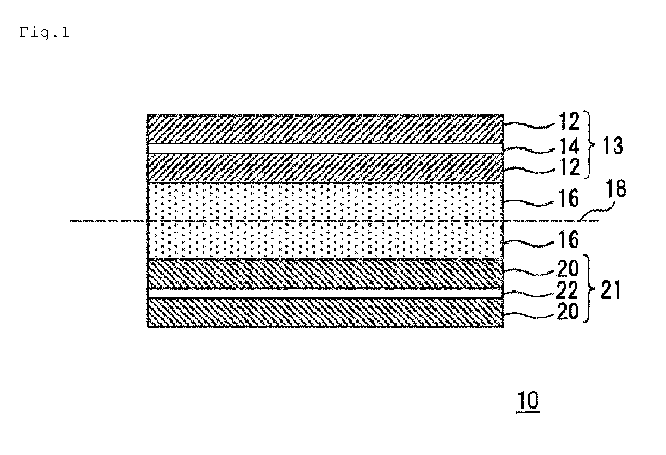

Fig. 1 is a schematic diagram illustrating an example of a lithium ion battery according to an embodiment of the present invention.

DESCRIPTION OF EMBODIMENTS

Hereinafter, embodiments of the present invention will be described with reference to the accompanying drawings. The drawings are schematic diagrams and the scales thereof are not equal to the actual scales thereof.

<Negative-electrode Material>

A negative-electrode material according to an embodiment is a carbonaceous negative-electrode material used in an alkali metal ion battery such as a lithium ion battery or a sodium ion battery and an average layer spacing $d_{002}$ of face (002) (hereinafter, referred to as "$d_{002}$") which is calculated by an X-ray diffraction method using CuK$\alpha$ radiation as a radiation source is equal to or greater than 0.340 nm, preferably equal to or greater than 0.350 nm, and more preferably equal to or greater than 0.365 nm. When $d_{002}$ is equal to or greater than the lower limit, destruction of a crystal structure occurring due to repeated doping and undoping of alkali metal ions of lithium or the like is suppressed and it is thus possible to improve the charging and discharging characteristics of the negative-electrode material.

The upper limit of the average layer spacing $d_{002}$ is not particularly limited, but is typically equal to or less than 0.400 nm, preferably equal to or less than 0.395 nm, and more preferably equal to or less than 0.390 nm. When $d_{002}$ is equal to or less than the upper limit, it is possible to suppress an increase in irreversible capacity of the negative-electrode material.

A carbonaceous material having such average layer spacing $d_{002}$ is generally called non-graphitizable carbon.

Further, the negative-electrode material according to this embodiment contains halogen as an essential component. Examples of the above-described halogen include fluorine, chlorine, bromine, and iodine. Among these, chlorine is particularly preferable.

Further, the halogen content of the negative-electrode material according to this embodiment is equal to or greater than 0.5 ppm and more preferably equal to or greater than 0.8 ppm. When the halogen content of the negative-electrode material according to this embodiment is equal to or greater than the lower limit, it is possible to improve the charging and discharging capacity of the alkali metal ion battery obtained using the negative-electrode material.

In addition, the halogen content of the negative-electrode material according to this embodiment is less than 50 ppm, more preferably equal to or less than 15 ppm, still more preferably equal to or less than 12 ppm, and particularly preferably equal to or less than 10 ppm. When the halogen content of the negative-electrode material according to this embodiment is equal to or less than the upper limit, it is possible to improve storage characteristics of the negative-electrode material.

In this manner, when the halogen content thereof is in the above-described range, the negative-electrode material according to this embodiment is excellent in balance of storage characteristics and charging and discharging capacity.

The halogen content of the negative-electrode material according to this embodiment can be controlled by adjusting the concentration of halogen gas in process gas used at the time of performing a carbonization process and the amount of halogen contained in a source material of the negative-electrode material. The halogen content can be calculated by absorbing the halogen hydrogen gas in combustion gas, which has been produced by combusting the negative-electrode material, in sodium hydroxide and then quantifying the halogen content in the solution using an ion chromatographic analysis apparatus.

The reason why the negative-electrode material according to this embodiment has excellent storage characteristics and charging and discharging capacity even though the $d_{002}$ is equal to or greater than 0.340 nm is not necessarily clear, but it is considered that a microstructure suitable for occlusion of lithium is formed by containing a specific amount of halogen and the structure is made such that adsorption of chemisorbed water is unlikely to occur on the surface of the negative-electrode material. That is, it is considered that when a specific amount of halogen is contained, a region contributing to an increase in capacity and a region contributing to the improvement in storage characteristics are formed in appropriate shapes.

Patent Document 1 (Japanese Unexamined Patent Publication No. 8-279358) describes that the halogen content is in the range of 50 ppm to 10000 ppm, preferably in the range of 100 ppm to 5000 ppm, and still more preferably in the range of 200 ppm to 3000 ppm, and the $d_{002}$ uses a negative-electrode material which is larger than that of a graphite material as a negative-electrode material for a lithium ion battery. Such a negative-electrode material is excellent in charging and discharging capacity.

However, according to the research of the inventors of the present invention, it is apparent that such a negative-electrode material is more likely to degrade in the air and is poorer in storage characteristics than the graphite material. Accordingly, it is necessary to store the carbonaceous material in an inert gas atmosphere or the like just after being produced and it is thus more difficult to treat the carbonaceous material than the graphite material.

In general, in a negative-electrode material having a $d_{002}$ which is larger than that of the graphite material, since fine pores are more likely to grow than in the graphite material, moisture is likely to be adsorbed in the pores. When moisture is adsorbed, an irreversible reaction occurs between lithium with which the negative-electrode material is doped and the moisture and an increase in irreversible capacity at the time of initial charging or a degradation in charging and discharging cycle characteristics is caused as a result. For this reason, it is thought that the negative-electrode material having a large $d_{002}$ is poorer in storage characteristics than the graphite material (for example, see Patent Document 2). Accordingly, in the related art, it has been tried to improve the storage characteristics by closing the pores of the negative-electrode material to reduce the equilibrium moisture adsorption (for example, see Patent Document 2).

However, the inventors of the present invention tested regeneration of the negative-electrode material by heating and drying the degraded negative-electrode material to remove moisture adsorbed in the fine pores, but could not completely regenerate the negative-electrode material. As disclosed in Patent Document 2, when the pores of the negative-electrode material are closed, there is a problem in that the charging and discharging capacity is lowered.

Therefore, the inventors of the present invention studied more intensively. As a result, it has been made clear that a negative-electrode material having more excellent storage characteristics and excellent charging and discharging capacity can be obtained by greatly reducing the halogen content of the negative-electrode material more than the reference in the related art, thereby making the present invention.

The negative-electrode material according to this embodiment is used as a negative-electrode material of an alkali metal ion battery such as a lithium ion battery or a sodium ion battery. Particularly, the negative-electrode material according to this embodiment is suitably used as a negative-electrode material of a lithium ion battery such as a lithium ion secondary battery.

(Moisture Content Measured Using Karl Fischer's Coulometric Titration Method)

In the negative-electrode material according to this embodiment, when a moisture content generated by maintaining the negative-electrode material under conditions of a temperature of 40°C and a relative humidity of 90 %RH for 120 hours, maintaining the negative-electrode material under conditions of a temperature of 130°C and a nitrogen atmosphere for 1 hour to preliminarily dry the negative-electrode material, and then maintaining the preliminarily-dried negative-electrode material at 200°C for 30 minutes is measured using a Karl Fischer's coulometric titration method, the moisture content generated from the preliminarily-dried negative-electrode material is preferably equal to or less than 0.20 mass% with respect to 100 mass% of the preliminarily-dried negative-electrode material, more preferably equal to or less than 0.15 mass%, and still more preferably equal to or less than 0.10 mass%.

By setting the moisture content to be equal to or less than the upper limit, it is possible to further suppress degradation of the negative-electrode material even when the negative-electrode material according to this embodiment is maintained in the air for a long period of time. Further, the moisture content is an indicator of the amount of chemisorbed water desorbed by maintaining the negative-electrode material at 200°C for 30 minutes.

The lower limit of the moisture content is not particularly limited, but is generally equal to or greater than 0.01 mass%.

When the moisture content measured using the Karl Fischer's coulometric titration method is equal to or less than the upper limit, it is thought that the reason for further suppressing the degradation of the negative-electrode material is that the lower moisture content the negative material has, the more difficult it is to cause adsorption of moisture, although the reason is not apparent.

From the study undertaken by the inventors of the present invention, it has been made to be clear that moisture to be adsorbed in the negative-electrode material can be roughly classified into physisorbed water and chemisorbed water and the smaller amount of chemisorbed water the negative material has, the more excellent the storage characteristics and the charging and discharging capacity are. That is, the inventors found that the scale of the amount of chemisorbed water is effective as a design guideline for realizing the negative-electrode material having excellent storage characteristics and charging and discharging capacity.

Here, the physisorbed water means adsorbed water which is physically present as water molecules on the surface of the negative-electrode material. On the other hand, the chemisorbed water means adsorbed water which coordinates with or chemically bonds to a first layer of the surface of the negative-electrode material.

It is thought that the surface of a negative-electrode material having a small amount of chemisorbed water has a structure which is difficult to coordinate with or chemically bond to moisture or a structure which is difficult to change to such a structure even when the negative-electrode material is maintained in the air. Therefore, by setting the moisture content to be equal to or less than the upper limit, it is thought that it is difficult to cause adsorption of moisture or to change the surface structure even when the negative-electrode material is stored in the air for a long time, thereby improving the storage characteristic.

In this embodiment, moisture desorbed from the negative-electrode material in the preliminary drying in which the negative-electrode material is maintained under the conditions of a temperature of 130°C and a nitrogen atmosphere for 1 hour is called physisorbed water, and moisture desorbed from the negative-electrode material in the process in which the preliminarily-dried negative-electrode material is maintained at 200°C for 30 minutes is called chemisorbed water.

(Crystallite Size)

In the negative-electrode material according to this embodiment, the crystallite size in the c-axis direction (hereinafter, also abbreviated as "$Lc_{(002)}$") calculated using an X-ray diffraction method is preferably equal to or less than 5 nm, more preferably equal to or less than 3 nm, and still more preferably equal to or less than 2 nm.

(Average Particle Diameter)

In the negative-electrode material according to this embodiment, the particle diameter ($D_{50}$, average particle diameter) at the time of 50% accumulation in a volume-based cumulative distribution is preferably equal to or greater than 1 $\mu$m and equal to or less than 50 $\mu$m and more preferably equal to or greater than 2 $\mu$m and equal to or less than 30 $\mu$m. Accordingly, it is possible to produce a high-density negative electrode.

(Specific Surface Area)

In the negative-electrode material according to this embodiment, the specific surface area measured using a three-point BET method in nitrogen adsorption is preferably equal to or greater than 1 $m^2$/g and equal to or less than 15 $m^2$/g and more preferably equal to or greater than 3 $m^2$/g and equal to or less than 8 $m^2$/g.

By setting the specific surface area measured using the three-point BET method in nitrogen adsorption to be equal to or less than the upper limit, it is possible to further suppress irreversible reaction of the negative-electrode material and the electrolyte.

By setting the specific surface area measured using the three-point BET method in nitrogen adsorption to be equal to or greater than the lower limit, it is possible to obtain appropriate permeability of the electrolyte into the negative-electrode material.

The method of calculating the specific surface area is as follows.

A monomolecular layer adsorption amount $W_m$ is calculated using Expression (1), the total surface area $S_{total}$ is calculated using Expression (2), and the specific surface area S is calculated using Expression (3).

$$1/[W \cdot \{(P_o/P)-1\}] = \{(C-1)/(W_m \cdot C)\}(P/P_o)(1/(W_m \cdot C)) \ldots (1)$$

In Expression (1), P represents the pressure of adsorbate gas at the adsorption equilibrium, $P_o$ represents the saturated vapor pressure of the adsorbate at an adsorption temperature, W represents the adsorbed amount under an adsorption equilibrium pressure P, $W_m$ represents the monomolecular layer adsorbed amount, and C represents a constant (C=exp{($E_1$-$E_2$)RT}) [where $E_1$ represents the adsorption heat (kJ/mol) of a first layer and $E_2$ represents the liquefaction heat (kJ/mol) at the measurement temperature of the adsorbate] related to the magnitude of an interaction between the solid surface and the adsorbate.

$$S_{total}=(W_m NA_{cs})M\ldots(2)$$

In Expression (2), N represents the Avogadro number, M represents the molecular weight, and $A_{cs}$ represents the adsorption cross-sectional area.

$$S=S_{total}/w\ldots(3)$$

In Expression (3), w represents the weight of a sample (g).

(Amount of Carbon Dioxide Gas Adsorbed)

In the negative-electrode material according to this embodiment, the amount of carbon dioxide gas adsorbed is preferably less than 10 mL/g, more preferably equal to or less than 8 mL/g, and still more preferably equal to or less than 6 mL/g. When the amount of carbon dioxide gas adsorbed is equal to or less than the upper limit, it is possible to further improve the storage characteristics of the negative-electrode material.
In the negative-electrode material according to this embodiment, the amount of carbon dioxide gas adsorbed is preferably equal to or greater than 0.05 mL/g and more preferably equal to or greater than 0.1 mL/g. When the amount of carbon dioxide gas adsorbed is equal to or greater than the lower limit, it is possible to further improve the charging capacity of lithium.
The amount of carbon dioxide gas adsorbed can be measured using a material obtained by vacuum-drying the negative-electrode material at 130°C for 3 hours or more using a vacuum dryer as a measurement sample and using ASAP-2000M manufactured by Micromeritics Instrument Corporation.

(Pore Volume)

In the negative-electrode material according to this embodiment, the pore volume in which the pore diameter measured using a mercury intrusion method is in the range of 0.003 μm to 5 μm is preferably less than 0.55 mL/g, more preferably equal to or less than 0.53 mL/g, and still more preferably equal to or less than 0.50 mL/g, from a viewpoint of improvement of a charging density.
In the negative-electrode material according to this embodiment, the pore volume in which the pore diameter measured using a mercury intrusion method is in the range of 0.003 μm to 5 μm is preferably equal to or greater than 0.10 mL/g, more preferably equal to or greater than 0.20 mL/g, and still more preferably equal to or greater than 0.30 mL/g, from a viewpoint of reduction of irreversible capacity.
Here, the pore volume based on the mercury intrusion method can be measured using AUTOPORE III 9420 (manufactured by Micromeritics Instrument Corporation).

(Discharging Capacity)

In the negative-electrode material according to this embodiment, the discharging capacity when a half-cell prepared under the conditions to be described below has been subjected to charging and discharging under charging and discharging conditions to be described below is preferably equal to or greater than 360 mAh/g, more preferably equal to or greater than 380 mAh/g, still more preferably equal to or greater than 400 mAh/g, and particularly preferably equal to or greater than 420 mAh/g. The upper limit of the discharging capacity is not particularly limited and is preferably higher. However, the discharging capacity is realistically equal to or less than 700 mAh/g and is generally equal to or less than 500 mAh/g. In this specification, "mAh/g" represents the capacity per 1 g of the negative-electrode material.

(Conditions for Producing Half-cell)

The conditions for producing the above-described half-cell will be described below.
A negative electrode formed of the above-described negative-electrode material is used. More specifically, an electrode formed of a composition in which a negative-electrode material, carboxymethyl cellulose, styrene-butadiene rubber, and acetylene black are mixed at a weight ratio of 100:1.5:3.0:2.0 is used.

The counter electrode is formed of metallic lithium.

A solution in which $LiPF_6$ is dissolved at a ratio of 1 M in a carbonate-based solvent (a mixed solvent in which ethylene carbonate and diethylcarbonate are mixed at a volume ratio of 1:1) is used as the electrolyte solution.

The negative electrode can be prepared, for example, as described below.

First, a predetermined amount of negative-electrode material, carboxymethyl cellulose, styrene-butadiene rubber, acetylene black, and water are stirred and mixed to prepare slurry. The acquired slurry is applied to a copper foil as a collector, is subjected to a preliminary drying process at 60°C for 2 hours, and is then subjected to a vacuum drying process at 120°C for 15 hours. Subsequently, by cutting out the resultant in a predetermined size, a negative electrode formed of the negative-electrode material can be obtained.

In addition, the negative electrode has a disk shape with a diameter of 13 mm, the negative-electrode active material layer (a part of the negative electrode other than the collector) has a disk shape with a thickness of 50 $\mu$m, and the counter electrode (an electrode formed of metallic lithium) has a disk shape with a diameter of 12 mm and a thickness of 1 mm.

Further, the half-cell can have a 2032-type coin cell shape.

(Charging and Discharging Conditions)

The charging and discharging conditions of the half-cell are as follows.

Measurement temperature: 25°
Charging method: constant-current constant-voltage method, Charging current: 25 mA/g, Charging voltage: 0 mV,
Charging cutoff current: 2.5 mA/g
Discharging method: constant-current method, Discharging current: 25 mA/g, Discharging cutoff voltage: 2.5 V

The "charging" of the half-cell means that lithium ions are made to migrate from the electrode formed of metallic lithium to the electrode formed of the negative-electrode material with application of a voltage. The "discharging" means that lithium ions are made to migrate from the electrode formed of the negative-electrode material to the electrode formed of metallic lithium.

<Method of Producing Negative-Electrode Material>

A method of producing the negative-electrode material according to this embodiment will be described below.

The negative-electrode material according to this embodiment can be produced by performing a carbonization process under appropriate conditions, for example, using a resin composition as a source material.

The production of the negative-electrode material using a resin composition as a source material has been performed in the related art. However, in this embodiment, the amount of halogen gas in an atmosphere in which the carbonization process is performed is highly controlled. That is, in order to obtain the negative-electrode material according to this embodiment, it is important to highly control the amount of halogen gas in an atmosphere in which the carbonization process is performed.

Hereinafter, an example of the method of producing the negative-electrode material according to this embodiment will be described. In this case, the method of producing the negative-electrode material according to this embodiment is not limited to the following example.

(Resin Composition)

First, a resin composition to be carbonized is selected as a source material of the negative-electrode material.

Examples of the resin included in the resin composition serving as a source material of the negative-electrode material according to this embodiment include thermosetting resins; thermoplastic resins; petroleum or coal tar or pitch such as petroleum tar or pitch secondarily produced at the time of producing ethylene, coal tar produced at the time of dry-distilling coal, heavy components or pitch obtained by removing low-boiling-point components of coal tar by distillation, and tar or pitch obtained by liquefying coal; products obtained by cross-linking the tar or pitch; and natural polymer materials such as coconut husk or timber. One or two or more types thereof can be used in combination. Among these examples, thermosetting resins can be preferably used in that they can be purified in a source material step, a negative-electrode material having small impurities is obtained, and processes for purification can be greatly reduced to cause a decrease in cost.

Examples of thermosetting resin include phenol resins such as novolac-type phenol resin and a resol-type phenol resin; epoxy resins such as a Bisphenol-type epoxy resin and a novolac-type epoxy resin; melamine resins; urea resins; aniline resins; cyanate resins; furan resins; ketone resins; unsaturated polyester resins; and urethane resins. Modifications obtained by modifying these examples into various components may be used.

Among these, phenol resins such as novolac-type phenol resin and a resol-type phenol resin which are resins using formaldehyde; melamine resins; urea resins; and aniline resins can be preferably used for the reason of a high actual carbon ratio.

When a thermosetting resin is used, a curing agent thereof can be used together.

Examples of the curing agent to be used for a novolac-type phenol resin include hexamethylene tetramine, a resol-type phenol resin, polyacetal, and paraformaldehyde. Hexamethylene tetramine or the like can be used as the curing agent for a resol-type phenol resin, a melamine resin, a urea resin, and an aniline resin.

The mixing content of the curing agent is generally equal to or greater than 0.1 parts by mass and equal to or less than 50 parts by mass with respect to 100 parts by mass of thermosetting resin.

An additive in addition to thermosetting resin and the curing agent can be mixed into the resin composition as a source material of the negative-electrode material.

The additive used herein is not particularly limited, and examples thereof include carbon precursors carbonized at a temperature of 200°C to 800°C, organic acids, inorganic acids, nitrogen-containing compounds, oxygen-containing compounds, aromatic compounds, and nonferrous metal elements. These additives can be used singly or in combination of two or more types depending on the type or the characteristics of the resin to be used.

The method of producing the resin composition is not particularly limited, and can employ (1) a method of melting and mixing the resin and other components, (2) a method of mixing the resin and other components by dissolution in a solvent, (3) a method of pulverizing and mixing the resin and other components, and the like.

The apparatus producing the resin composition is not particularly limited, but kneading apparatuses such as kneaders and a uniaxial or biaxial kneader can be used, for example, when the melting and mixing method is performed. When the dissolving and mixing method is performed, mixers such as a Henschel mixer and a disperser can be used. When the pulverizing and mixing method is performed, apparatuses such as a hammer mill and a jet mill can be used.

The resin composition obtained in this way may be a resin composition in which plural types of components are physically mixed alone or a resin composition of which a part chemically reacts by mechanical energy applied to the mixing (such as stirring and kneading) and thermal energy converted therefrom. Specifically, a mechanochemical reaction using mechanical energy or a chemical reaction using thermal energy may be carried out.

(Carbonization Process)

The resultant resin composition is then carbonized.

Regarding the conditions of the carbonization process, for example, the temperature is raised at a rate of 1°C/hour to 200°C/hour and the carbonization process can be performed by maintaining the resin composition at a temperature of 800°C to 1500°C under a pressure of 0.01 Pa to 101 kPa (1 atm) for 0.1 hours to 50 hours, preferably for 0.5 hours to 10 hours.

(Atmosphere During Carbonization Process)

In addition, in order to obtain the negative-electrode material according to the present invention, it is important to highly control the amount of halogen gas in an atmosphere in which the carbonization process is performed.

Specifically, the carbonization process is performed in a mixed gas atmosphere of inert gas and halogen gas. The mixing ratio of the inert gas to the halogen gas is set to be preferably in the range of 97/3 to 56/44, more preferably in the range of 96/4 to 58/42, and particularly preferably in the range of 94/6 to 60/40 in terms of the volume ratio.

Examples of the halogen gas include chlorine gas, bromine gas, iodine gas, and fluorine gas. Among these, chlorine gas is particularly preferable.

Examples of the inert gas include nitrogen gas, argon gas, and helium gas. Among these, nitrogen gas is particularly preferable.

In this manner, it is possible to suppress thermal decomposition (oxidative decomposition) of a resin, thereby obtaining a negative-electrode material having a desired halogen content.

The conditions of temperature, time, and the like at the time of performing the carbonization process can be appropriately adjusted so as to optimize the characteristics of the negative-electrode material.

A preliminary carbonization process may be performed before performing the carbonization process.

The conditions of the preliminary carbonization process are not particularly limited, and an example thereof includes a temperature of 200°C to 1000°C and a time of 1 hour to 10 hours. In this way, by performing the preliminary carbonization process before performing the carbonization process, it is possible to prevent the pulverized resin composition from being re-fused in the carbonization process and thus to efficiently obtain a desired negative-electrode material, even when the resin composition is insolubilized and a process of pulverizing the resin composition is performed before performing the carbonization process.

A process of curing the resin composition may be performed before performing the preliminary carbonization process.

The method of the curing process is not particularly limited, but examples thereof include a method of thermally curing the resin composition by applying heat allowing a curing reaction to the resin composition or a method of using a curing agent together with a thermosetting resin. Accordingly, since the preliminary carbonization process can be performed substantially in a solid phase, the carbonization process or the preliminary carbonization process can be performed in a state where the structure of thermosetting resin is maintained to a certain extent, thereby controlling the structure or the characteristics of the negative-electrode material.

When the carbonization process or the preliminary carbonization process is performed, metal, pigment, lubricant, antistatic agent, oxidation inhibitor, and the like may be added to the resin composition to give desired characteristics to the negative-electrode material.

When the curing process or the preliminary carbonization process is performed, the processed material may be pulverized before performing the carbonization process. In this case, it is possible to reduce unbalance in thermal history in the carbonization process and to enhance uniformity in surface state of the resultant negative-electrode material. It is also possible to improve handling properties of the processed material.

From the above-described procedures, the negative-electrode material according to this embodiment can be obtained.

<Negative-electrode Active Material>

The negative-electrode active material according to this embodiment will be described below.

The negative-electrode active material means a material from and to which alkali metal ions such as lithium ions can be input and output in an alkali metal ion battery. The negative-electrode active material according to this embodiment includes the above-described negative-electrode material according to this embodiment.

The negative-electrode active material according to this embodiment may further include a negative-electrode material of a type different from the above-described negative-electrode material. Examples of such a negative-electrode material include known negative-electrode materials such as silicon, silicon monoxide, and graphite materials.

Among these negative-electrode materials, the negative-electrode active material according to this embodiment preferably includes a graphite material in addition to the above-described negative-electrode material according to this embodiment. Accordingly, it is possible to improve the charging and discharging capacity of the resultant alkali metal ion battery. As a result, it is possible to particularly improve the balance of the charging and discharging capacity and the charging and discharging efficiency of the resultant alkali metal ion battery.

The particle diameter (average particle diameter) of the used graphite material at the time of 50% accumulation in a volume-based cumulative distribution is preferably equal to or greater than 2 $\mu$m and equal to or less than 50 $\mu$m and more preferably equal to or greater than 5 $\mu$m and equal to or less than 30 $\mu$m. Accordingly, it is possible to produce a negative electrode with a high density while maintaining high charging and discharging efficiency.

<Negative Electrode of Alkali Metal Ion Battery and Alkali Metal Ion Battery>

A negative electrode of an alkali metal ion battery and an alkali metal ion battery according to this embodiment will be described below.

The negative electrode of an alkali metal ion battery (hereinafter, also simply referred to as "negative electrode") according to this embodiment is produced using the negative-electrode active material according to this embodiment. Accordingly, it is possible to provide a negative electrode having excellent storage characteristics and excellent charging and discharging capacity.

The alkali metal ion battery according to this embodiment is produced using the negative electrode according to this embodiment. Accordingly, it is possible to provide an alkali metal ion battery having excellent storage characteristics and excellent charging and discharging capacity.

The alkali metal ion battery according to this embodiment is, for example, a lithium ion battery or a sodium ion battery. A lithium ion battery will be exemplified in the following description.

Fig. 1 is a schematic diagram illustrating an example of a lithium ion battery according to this embodiment.

As shown in Fig. 1, the lithium ion battery 10 includes a negative electrode 13, a positive electrode 21, an electrolyte solution 16, and a separator 18.

The negative electrode 13 includes a negative-electrode active material layer 12 and a negative-electrode collector 14, as shown in Fig. 1.

The negative-electrode collector 14 is not particularly limited, but a known negative-electrode collector can be used and, for example, a copper foil or a nickel foil can be used.

The negative-electrode active material layer 12 is formed of the negative-electrode active material according to this embodiment.

The negative electrode 13 can be produced, for example, as follows.

1 part by weight to 30 parts by weight of a generally-known organic polymer binder (for example, fluorine-based polymers such as polyvinylidene fluoride and polytetrafluoroethylene and rubber-like polymers such as styrene-butadiene rubber, butyl rubber, and butadiene rubber) and an appropriate amount of a viscosity-adjusting solvent (such as N-methyl-2-pyrrolidone and dimethylformamide) or water are added to 100 parts by weight of the negative-electrode active material and the resultant is kneaded, whereby a negative-electrode slurry is produced.

The resultant slurry is formed in a sheet shape or a pellet shape through compression molding or roll forming, whereby the negative-electrode active material layer 12 can be obtained. The resultant negative-electrode active material layer 12 and the negative-electrode collector 14 are stacked to obtain the negative electrode 13.

The negative electrode 13 may be produced by applying and drying the obtained negative-electrode slurry to the negative-electrode collector 14.

The electrolyte solution 16 serves to fill a space between the positive electrode 21 and the negative electrode 13 and is a layer in which lithium ions move by charging and discharging.

The electrolyte solution 16 is not particularly limited and a generally-known electrolyte solution can be used. For example, a solution in which lithium salts as an electrolyte is dissolved in a non-aqueous solvent is used.

Examples of the non-aqueous solvent include cyclic esters such as propylene carbonate, ethylene carbonate, and $\gamma$-butyrolactone, chain-like esters such as dimethylcarbonate and diethylcarbonate, chain-like ethers such as dimethoxyethane, and mixtures thereof.

The electrolyte is not particularly limited and a generally-known electrolyte can be used. For example, lithium metal salts such as $LiClO_4$ and $LiPF_6$ can be used. The salts may be mixed with polyethylene oxide, polyacrylonitrile, or the like and the resultant may be used as a solid electrolyte.

The separator 18 is not particularly limited and a generally-known separator can be used. For example, porous films and unwoven fabrics of polyethylene or polypropylene can be used.

The positive electrode 21 includes a positive-electrode active material layer 20 and a positive-electrode collector 22, as shown in Fig. 1.

The positive-electrode active material layer 20 is not particularly limited and can be formed of a generally-known positive-electrode active material. The positive-electrode active material is not particularly limited and examples thereof include complex oxides such as lithium cobalt oxide ($LiCoO_2$), lithium nickel oxide ($LiNiO_2$), and lithium manganese oxide ($LiMn_2O_4$) and conductive polymers such as polyaniline and polypyrrole.

The positive-electrode collector 22 is not particularly limited and a generally-known positive-electrode collector can be used. For example, an aluminum foil can be used.

The positive electrode 21 in this embodiment can be produced using a generally-known method of producing a positive electrode.

While embodiments of the present invention have been described above, the embodiments are only an example of the present invention and various configurations other than those described above may be employed.

The present invention is not limited to the above-described embodiments, and modifications, improvements, and the like within a range in which the object of the present invention can be achieved are included in the present invention.

[Examples]

The present invention will be described below in conjunction with examples and comparative examples, but the present invention is not limited to the examples. In the examples, "parts" represents "parts by weight".

[1] Evaluation Method of Negative-electrode Material

First, an evaluation method of negative-electrode materials obtained in examples and comparative examples to be described later will be described.

1. Grain Size Distribution

The grain size distribution of a negative-electrode material is measured using a laser diffraction grain size distribution measuring instrument LA-920 manufactured by Horiba Ltd. and a laser diffraction method. The particle diameter ($D_{50}$, average particle diameter) of the negative-electrode material at the time of 50% accumulation in a volume-based cumulative distribution is calculated from the measurement result.

2. Specific Surface Area

A specific surface area is measured using NOVA-1200 manufactured by Yuasa-Ionics Co. Ltd. and using a three-point BET method in nitrogen adsorption. The specific calculation method thereof is the same as described above.

3. $d_{002}$ and $L_{C(002)}$ of Negative-electrode Material

An average layer spacing $d_{002}$ of face (002) is measured using an X-ray diffraction apparatus "XRD-7000" manufactured by Shimadzu Corporation.

The average layer spacing $d_{002}$ of face (002) is calculated from a spectrum obtained through the X-ray diffraction measurement of the negative-electrode material using the following Bragg equation.

$$\lambda = 2d_{hkl}\sin\theta \text{ Bragg equation } (d_{hkl}=d_{002})$$

$\lambda$: wavelength of characteristic X-ray $K_{\alpha 1}$ output from negative electrode
$\theta$: reflection angle of spectrum
$L_{C(002)}$ is measured as follows.

The value of $L_{C(002)}$ is determined from the half-value width of the peak of 002 face and the diffraction angle in the spectrum obtained by X-ray diffraction measurement using the following Scherrer equation.

$$L_{C(002)} = 0.94\lambda/(\beta\cos\theta) \text{ (Scherrer equation)}$$

$L_{C(002)}$: size of crystallite
$\lambda$: wavelength of characteristic X-ray $K_{\alpha 1}$ output from negative electrode
$\beta$: half-value width of peak (radian)
$\theta$: reflection angle of spectrum

4. Amount of Carbon Dioxide Gas Adsorbed

The amount of carbon dioxide gas adsorbed is measured using a negative-electrode material subjected to vacuum drying at 130°C for 3 hours or more using a vacuum dryer as a measurement sample and using ASAP-2000M manufactured by Micromeritics Instrument Corporation.

0.5 g of the measurement sample is input to a measurement sample tube, the measurement sample is subjected to vacuum drying at 300 °C for 3 hours or more under a reduced pressure equal to or lower than 0.2 Pa, and the amount of carbon dioxide gas adsorbed is then measured.

The adsorption temperature is set to 0°C, the pressure is reduced until the pressure of the sample tube to which the measurement sample is input is equal to or lower than 0.6 Pa, carbon dioxide gas is introduced into the sample tube, and the amount of carbon dioxide gas adsorbed until the equilibrium pressure in the sample tube reaches 0.11 MPa (corresponding to a relative pressure of 0.032) is measured using a constant volume method and is expressed in the unit of mL/g. The adsorbed amount is a conversion value in the standard state (STP).

5. Measurement of Moisture Content using Karl Fischer's Coulometric Titration Method

The moisture content using the Karl Fischer's coulometric titration method is measured in the following process.

(Process 1) 1 g of the negative-electrode material was maintained in an apparatus of mini environment test equipment (SH-241 manufactured by ESPEC Corp.) under the conditions of a temperature of 40°C and a relative humidity of 90 %RH for 120 hours. The negative-electrode material was spread in a vessel with a length of 5 cm, a width of 8 cm, and a height of 1.5 cm so as to be as small in thickness as possible and was placed in the apparatus.
(Process 2) The negative-electrode material was preliminarily dried by maintaining the negative-electrode material under the conditions of a temperature of 130°C and a nitrogen atmosphere for 1 hour, and then a moisture content generated by maintaining the preliminarily-dried negative-electrode material at 200°C for 30 minutes was measured using Karl Fischer's coulometric titration method and using CA-06 manufactured by Mitsubishi Chemical Analytech Co., Ltd.

6. Measurement of Total Adsorbed Amount

1 g of the negative-electrode material was subjected to vacuum drying at 200°C for 24 hours and then the weight of the negative-electrode material was measured. Subsequently, the resultant was maintained in the mini environment test equipment (SH-241 manufactured by ESPEC Corp.) under the conditions of at 40°C and a relative humidity of 90 %RH for 120 hours. The negative-electrode material was spread in a vessel with a length of 5 cm, a width of 8 cm, and a height of 1.5 cm so as to be as small in thickness as possible and was placed in the apparatus. Thereafter, the weight of the negative-electrode material was measured and the total adsorbed amount was measured using the following expression.

Total adsorbed amount [%]=100×(weight after maintenance of 120 hours-weight after vacuum drying)/(weight after vacuum drying)

7. Storage Characteristics

The initial efficiencies of the negative-electrode material just after being produced and the negative-electrode material after being subjected to the following storage test were measured using the following method. Then, the variations in the initial efficiencies were calculated.

(Storage Test)

1 g of the negative-electrode material was maintained in an apparatus of mini environment test equipment (SH-241 manufactured by ESPEC Corp.) under the conditions of a temperature of 40°C and a relative humidity of 90 %RH for 7 days. The negative-electrode material was spread in a vessel with a length of 5 cm, a width of 8 cm, and a height of 1.5 cm so as to be as small in thickness as possible and was placed in the apparatus. Thereafter, the negative-electrode material was dried by maintaining the negative-electrode material under the conditions of a temperature of 130° and the nitrogen atmosphere for 1 hour.

(1) Production of Half-Cell

1.5 parts of carboxymethyl cellulose (CMC Daicel 2200 manufactured by DAICEL FINECHEM LTD.), 3.0 parts of styrene-butadiene rubber (TRD-2001 manufactured by JSR Corporation), 2.0 parts of acetylene black (DENKA BLACK manufactured by DENKI KAGAKU KOGYO KABUSHIKI KAISHA), and 100 parts of distilled water were added to 100 parts of the negative-electrode materials obtained in the examples and the comparative examples to be described later, and the resultant was stirred and mixed by the use of a rotation-revolution mixer to produce negative-electrode slurry.

The produced negative-electrode slurry was applied to one surface of a copper foil (NC-WS manufactured by Furukawa Electric Co., Ltd.) with a thickness of 14 $\mu$m, the resultant was preliminarily dried in air of 60 °C for 2 hours, and then the resultant was subjected to vacuum drying at 120°C for 15 hours. After the vacuum drying, an electrode was press-molded by the use of a roll press. The resultant was cut out in a disk shape with a diameter of 13 mm to produce a negative electrode. The thickness of the negative-electrode active material layer was 50 $\mu$m.

Metal lithium was formed in a disk shape with a diameter of 12 mm and a thickness of 1 mm to produce a counter electrode. A porous film of polyolefin (product name: CELGARD 2400, manufactured by CELGARD Corporation) was used as the separator.

A bipolar half-cell having a 2032 coil cell shape was produced in a glove box in an argon atmosphere using the negative electrode, the counter electrode, and the separator and using a solution in which $LiPF_6$ was added at a ratio of 1 M to a mixed solvent of ethylene carbonate and diethyl carbonate at a volume ratio of 1:1 as the electrolyte solution, and the half-cell was evaluated as follows.

(2) Charging and Discharging of Half-Cell

Charging and discharging operations are performed under the following conditions.

Measurement temperature: 25°
Charging method: constant-current constant-voltage method, Charging current: 25 mA/g, Charging voltage: 0 mV, Charging cutoff current: 2.5 mA/g
Discharging method: constant-current method, Discharging current: 25 mA/g, Discharging cutoff voltage: 2.5 V

The charging capacity and the discharging capacity [mAh/g] per 1 g of the negative electrode material were calculated on the basis of the values of the charging capacity and the discharging capacity measured under the above-described conditions. The initial efficiency and the initial efficiency variation were calculated using the following expressions.

$$\texttt{Initial efficiency [\%]=100×(discharging capacity)/(charging capacity)}$$

$$\texttt{Initial efficiency variation [\%]=100×(initial efficiency after storage test)/(initial efficiency just after production)}$$

8. Pore Volume

The pore volume using a mercury intrusion method is measured using Autopore III 9420 manufactured by Micromeritics Instrument Corporation.

The negative-electrode material is input to a sample vessel and is degassed with a pressure of 2.67 Pa or less for 30 minutes. Then, mercury is introduced into the sample vessel and the sample vessel is slowly pressurized to intrude mercury into the pores of the negative-electrode material (with a maximum pressure of 414 MPa). The pore volume distribution of the negative-electrode material is measured using the following expression from the relationship between the pressure and the amount of mercury intruded. The volume of mercury intruded into the negative-electrode material from a pressure (0.25 MPa) corresponding to a pore diameter of 5 $\mu$m to the maximum pressure (414 MPa: corresponding to a pore diameter of 3 nm) is set as a pore volume with a pore diameter of 5 $\mu$m or less. In calculation of the pore diameter, when mercury is intruded into a cylindrical pore with a diameter of D under a pressure of P and it is assumed that the surface tension of mercury is defined as $\gamma$ and the contact angle between mercury and the pore wall is defined as $\theta$, the following expression is established from the balance of the surface tension and the pressure acting on the pore cross-section.

$$\texttt{-}\pi\texttt{D}\gamma\texttt{cos}\theta\texttt{=}\pi\texttt{(D/2)}^{2}\texttt{·P}$$

$$\texttt{D=(-4}\gamma\texttt{cos}\theta\texttt{)/P}$$

Here, the relationship between the pressure P and the pore diameter D is calculated using the following expression by setting the surface tension of mercury to 484 dyne/cm, setting the contact angle between mercury and carbon to 130 degrees, expressing the pressure P in the unit of MPa, and expressing the pore diameter D in the unit of $\mu$m.

$$\texttt{D=1.27/P}$$

9. Chlorine Content

HCl in combustion gas generated by combusting a negative-electrode material using an oxyhydrogen flame combustion apparatus was absorbed in a 0.01 mole NaOH aqueous solution. Then, the chlorine content in the aqueous solution was quantified using an ion chromatography analyzer. In addition, the calibration curve of the ion chromatographic analyzer was prepared by analyzing a solution which was prepared by diluting a chloride ion standard solution for ion chromatography (sodium chloride aqueous solution with a chlorine ion concentration of 1000 ppm, manufactured by Kanto Chemical Co., Inc.).

[2] Production of Negative-electrode Material

(Example 1)

Oxidized pitch was produced from petroleum pitch on the basis of the method described in paragraph 0051 of Patent Document 1 (Japanese Unexamined Patent Publication No. 8-279358). Subsequently, the oxidized pitch was used as a source material to perform a procedure of processes (a) to (f), whereby Negative-electrode material 1 was obtained.

(a) 510 g of oxidized pitch was placed in a heat-treating furnace. Thereafter, the temperature was raised at 100°C/hour from room temperature to 500°C without performing any one of replacement of reducing gas, replacement of inert gas, flowing of reducing gas, and flowing of inert gas.

(b) Subsequently, the resultant was subjected to a defatting process at 500°C for 2 hours without performing any one of replacement of reducing gas, replacement of inert gas, flowing of reducing gas, and flowing of inert gas and was then cooled.

(c) The obtained powder is pulverized by the use of a vibrating ball mill.

(d) Thereafter, 204 g of the obtained powder was placed in a heat-treating furnace. Subsequently, the temperature was raised at 100°C/hour from room temperature to 1200°C under replacement and flowing of inert gas (nitrogen).

(e) Under flowing of mixed gas of nitrogen gas and chlorine gas (volume ratio of 65:35), the resultant was maintained at 1200°C for 8 hours to carbonize the resultant.

(f) Under flowing of inert gas (nitrogen), the resultant was naturally cooled to 600°C and was then cooled at 100°C/hour from 600°C to 100°C or less.

(Example 2)

Phenol resin PR-55321B (manufactured by Sumitomo Bakelite Co., Ltd.) which is a thermosetting resin was used as a source material to perform a procedure of processes (a) to (f), whereby Negative-electrode material 2 was obtained.

(a) 510 g of thermosetting resin was placed in a heat-treating furnace. Thereafter, the temperature was raised at 100°C/hour from room temperature to 500°C without performing any one of replacement of reducing gas, replacement of inert gas, flowing of reducing gas, and flowing of inert gas.

(b) Subsequently, the resultant was subjected to a defatting process at 500°C for 2 hours without performing any one of replacement of reducing gas, replacement of inert gas, flowing of reducing gas, and flowing of inert gas and was then cooled.

(c) The obtained powder was pulverized by the use of a vibrating ball mill.

(d) Thereafter, 204 g of the obtained powder was placed in a heat-treating furnace. Subsequently, the temperature was raised at 100°C/hour from room temperature to 1200°C under replacement and flowing of inert gas (nitrogen).

(e) Under flowing of mixed gas of nitrogen gas and chlorine gas (volume ratio of 60:40), the resultant was maintained at 1200°C for 8 hours to carbonize the resultant.

(f) Under flowing of inert gas (nitrogen), the resultant was naturally cooled to 600°C and was then cooled at 100°C/hour from 600°C to 100°C or less.

(Example 3)

A negative-electrode material 3 was produced in the same method as that of Example 2 except that the atmosphere of the carbonization process of the step (e) was changed to the flow of mixed gas of nitrogen gas and chlorine gas (volume ratio of 85:15).

(Example 4)

A negative-electrode material 4 was produced in the same method as that of Example 2 except that the atmosphere of the carbonization process of the step (e) was changed to the flow of mixed gas of nitrogen gas and chlorine gas (volume ratio of 90:10).

(Example 5)

A negative-electrode material 5 was produced in the same method as that of Example 2 except that the atmosphere of the carbonization process of the step (e) was changed to the flow of mixed gas of nitrogen gas and chlorine gas (volume ratio of 94:6).

(Comparative Example 1)

A negative-electrode material 6 was produced in the same method as that of Example 1 except that the atmosphere of the carbonization process of the step (e) was changed to the flow of mixed gas of nitrogen gas and chlorine gas (volume ratio of 50:50).

(Comparative Example 2)

A negative-electrode material 7 was produced in the same method as that of Example 2 except that the atmosphere of the carbonization process of the step (e) was changed to the flow of mixed gas of nitrogen gas and chlorine gas (volume ratio of 55:45).

(Comparative Example 3)

A negative-electrode material 8 was produced in the same method as that of Example 1 except that the atmosphere of the carbonization process of the step (e) was changed to the flow of mixed gas of nitrogen gas and chlorine gas (volume ratio of 99:1).

(Comparative Example 4)

A negative-electrode material 9 was produced in the same method as that of Example 2 except that the atmosphere of the carbonization process of the step (e) was changed to the flow of mixed gas of nitrogen gas and chlorine gas (volume ratio of 98:2).
Negative-electrode materials 1 to 9 obtained in Examples and Comparative Examples were subjected to the above-described various evaluations. The evaluation results are listed in Table 1.
The chlorine contents of the negative-electrode materials obtained in Examples 1 to 5 were respectively equal to or greater than 0.5 ppm and less than 50 ppm.
A lithium ion battery using the negative-electrode material having such a chlorine content was excellent in storage characteristics and charging and discharging capacity.
Meanwhile, the chlorine contents of the negative-electrode materials obtained in Comparative Examples 1 and 2 were respectively equal to or greater than 50 ppm. A lithium ion battery using the negative-electrode material having such a chlorine content was excellent in charging and discharging capacity just after the production, but the variation of the initial efficiency was low and storage characteristics were poor.
Further, the chlorine contents of the negative-electrode materials obtained in Comparative Examples 3 and 4 were respectively less than 0.5 ppm. A lithium ion battery using the negative-electrode material having such a chlorine content has poor storage characteristics and charging and discharging capacity.

[Table 1]

| Production method | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Source material | Petroleum pitch | Thermosetting resin | Thermosetting resin | Thermosetting resin | Thermosetting resin | Petroleum pitch | Thermosetting resin | Petroleum pitch | Thermosetting resin |
| Physical property of negative-electrode material | | | | | | | | | |
| Chlorine amount [ppm] | 46.0 | 48.0 | 10.0 | 6.00 | 1.0 | 61.0 | 58.0 | 0.3 | 0.4 |
| Moisture content by Karl Fischer method (200°C) [%] | 0.18 | 0.18 | 0.11 | 0.07 | 0.06 | 0.32 | 0.29 | 0.24 | 0.26 |
| Total amount of adsorbed moisture [%] | 2.4 | 2.2 | 2.5 | 2.4 | 2.3 | 2.5 | 2.4 | 2.2 | 2.1 |
| Specific surface area [$m^2$/g] | 5.6 | 5.7 | 6.2 | 6.2 | 5.5 | 6.1 | 5.4 | 5.5 | 6.2 |
| Amount of $CO_2$ adsorbed [mL/g] | 9.4 | 9.2 | 8.7 | 8.8 | 8.8 | 9.4 | 9.1 | 8.8 | 8.7 |
| Pore volume with pore diameter of 0.003 $\mu$m to 5 $\mu$m [mL/g] | 0.53 | 0.53 | 0.48 | 0.49 | 0.47 | 0.52 | 0.53 | 0.54 | 0.52 |
| Average particle diameter $D_{50}$ [$\mu$m] | 9.2 | 9.5 | 8.5 | 8.8 | 9.2 | 10.0 | 9.5 | 9.8 | 10.5 |
| Average layer spacing [nm] | 0.375 | 0.371 | 0.376 | 0.375 | 0.371 | 0.373 | 0.371 | 0.373 | 0.374 |
| Crystallite size [nm] | 4.5 | 4.2 | 3.6 | 4.1 | 3.7 | 5.5 | 4.4 | 5.2 | 5.4 |
| | Example 1 | Example 2 | Example 3 | Example 4 | Example 5 | Comparative Example 1 | Comparative Example 2 | Comparative Example 3 | Comparative Example 4 |
| Battery characteristics | | | | | | | | | |

EP 2 942 829 A1

(continued)

| | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Just after production | | | | | | | | | |
| Charging capacity [mAh/g] | 465 | 460 | 455 | 451 | 440 | 475 | 473 | 405 | 406 |
| Discharging capacity [mAh/g] | 410 | 410 | 410 | 402 | 390. | 423 | 420 | 360 | 357 |
| Initial efficiency [%] | 88 | 89 | 90 | 89 | 89 | 89 | 89 | 89 | 88 |
| After storage test | | | | | | | | | |
| Charging capacity [mAh/g] | 495 | 478 | 458 | 456 | 442 | 520 | 515 | 439 | 435 |
| Discharging capacity [mAh/g] | 411 | 402 | 400 | 400 | 388 | 402 | 409 | 350 | 348 |
| Initial efficiency [%] | 83 | 84 | 87 | 88 | 88 | 77 | 79 | 80 | 80 |
| Variance of initial efficiency [%] | 94 | 94 | 97 | 98 | 99 | 87 | 89 | 90 | 91 |

This application is based on Japanese Patent Application No. 2012-268645 filed on December 7, 2012 and Japanese Patent Application No. 2013-114369 filed on May 30, 2013, the contents of which are incorporated hereinto by reference.

**Claims**

1. A carbonaceous negative-electrode material for an alkali metal ion battery in which an average layer spacing $d_{002}$ of face (002) calculated by an X-ray diffraction method using CuKα radiation as a radiation source is equal to or greater than 0.340 nm,
   wherein a halogen content is equal to or greater than 0.5 ppm and less than 50 ppm.

2. The negative-electrode material according to claim 1,
   wherein when a moisture content generated by maintaining the negative-electrode material under conditions of a temperature of 40°C and a relative humidity of 90%RH for 120 hours, maintaining the negative-electrode material under conditions of a temperature of 130°C and a nitrogen atmosphere for 1 hour to preliminarily dry the negative-electrode material, and maintaining the preliminarily-dried negative-electrode material at 200°C for 30 minutes is measured using a Karl Fischer coulometric titration method, the moisture content generated from the preliminarily-dried negative-electrode material is equal to or less than 0.20 mass% with respect to 100 mass% of the preliminarily-dried negative-electrode material.

3. The negative-electrode material according to claim 1 or 2,
   wherein when a half-cell, which is produced using the negative-electrode material as a negative electrode, using metallic lithium as a counter electrode, and using a solution in which $LiPF_6$ is dissolved in a carbonate-based solvent at a ratio of 1 M as an electrolyte solution, is charged at 25°C using a constant-current constant-voltage method under conditions of a charging current of 25 mA/g, a charging voltage of 0 mV, and a charging cutoff current of 2.5 mA/g and is then discharged using a constant-current method under conditions of a discharging current of 25 mA/g and a discharging cutoff voltage of 2.5 V, discharging capacity is equal to or greater than 360 mAh/g.

4. The negative-electrode material according to any one of claims 1 to 3,
   wherein an amount of carbon dioxide gas adsorbed is less than 10 mL/g.

5. The negative-electrode material according to any one of claims 1 to 4,
   wherein the pore volume in which the pore diameter measured using a mercury intrusion method is in the range of 0.003 μm to 5 μm is less than 0.55 mL/g.

6. A negative-electrode active material comprising the negative-electrode material according to any one of claims 1 to 5.

7. The negative-electrode active material according to claim 6, further comprising a negative-electrode material whose type is different from that of the negative-electrode material.

8. The negative-electrode active material according to claim 7, wherein the different type of negative-electrode material is a graphite material.

9. A negative electrode for an alkali metal ion battery, comprising:

   a negative-electrode active material layer which includes the negative-electrode active material according to at least any one of claims 6 to 8; and
   a negative-electrode collector,
   wherein the negative-electrode active material layer and the negative-electrode collector are stacked in this order.

10. An alkali metal ion battery comprising at least:

    the negative electrode for an alkali metal ion battery according to claim 9;
    an electrolyte; and
    a positive electrode.

11. The alkali metal ion battery according to claim 10,

wherein the alkali metal ion battery is a lithium ion battery or a sodium ion battery.

Fig.1

| | | |
|---|---|---|
| **INTERNATIONAL SEARCH REPORT** | | International application No.<br>PCT/JP2013/082008 |

**A. CLASSIFICATION OF SUBJECT MATTER**
*H01M4/587*(2010.01)i, *H01M4/36*(2006.01)i

According to International Patent Classification (IPC) or to both national classification and IPC

**B. FIELDS SEARCHED**

Minimum documentation searched (classification system followed by classification symbols)
H01M4/00-62

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 9-055203 A  (Fuji Photo Film Co., Ltd.),<br>25 February 1997 (25.02.1997),<br>claims 3, 6; paragraphs [0015], [0017], [0061]<br>(Family: none) | 1-11<br>1-11 |
| X | JP 2006-185812 A  (Dainippon Printing Co., Ltd.),<br>13 July 2006 (13.07.2006),<br>claims 1, 5; paragraphs [0017], [0027]<br>(Family: none) | 1-11 |

| | | | |
|---|---|---|---|
| ☒  Further documents are listed in the continuation of Box C. | | ☐  See patent family annex. | |

| | | |
|---|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>    24 February, 2014 (24.02.14) | Date of mailing of the international search report<br>    04 March, 2014 (04.03.14) |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/082008

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 8-279358 A (Kureha Chemical Industry Co., Ltd.), 22 October 1996 (22.10.1996), claims 1, 2, 6, 7; paragraphs [0034], [0035]; examples & US 5772974 A & EP 726606 A1 & CA 2169114 A & KR 10-0173841 B | 1-11 |
| Y | JP 9-092283 A (Petoca, Ltd.), 04 April 1997 (04.04.1997), paragraphs [0015], [0019] (Family: none) | 1-11 |
| A | JP 10-284089 A (Sony Corp.), 23 October 1998 (23.10.1998), entire text & US 6335122 B1 & EP 972313 A & WO 98/044580 A1 & CA 2285275 A | 1-11 |
| A | WO 2007/40007 A1 (Kureha Corp.), 12 April 2007 (12.04.2007), entire text & JP 5065901 B & US 2009/0297953 A1 & KR 10-2008-0042858 A | 1-11 |
| A | WO 98/30496 A1 (Nippon Sanso Corp.), 16 July 1998 (16.07.1998), entire text & EP 891943 A1 & CA 2248218 A & CN 1217706 A | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8279358 A
- WO 2007040007 A
- JP 2012268645 A
- JP 2013114369 A